# EUROPÄISCHE PATENTSCHRIFT

(11) **EP 1 977 959 B1**
(45) Veröffentlichungstag und Bekanntmachung des Hinweises auf die Patenterteilung: **24.02.2010**
(21) Anmeldenummer: 08005077.6
(22) Anmeldetag: 19.03.2008
(51) Int. Cl.: B62D 25/14, B62D 27/06, F16B 5/00, F16B 37/04

(54) **Befestigungselement**
Fastening element
Elément de fixation

(30) Priorität: 02.04.2007 DE 102007015866
(43) Veröffentlichungstag der Anmeldung: 08.10.2008
(73) Patentinhaber: GM Global Technology Operations, Inc., Detroit, MI 48265-3000 (US)
(72) Erfinder: Billmaier, Walter, 65428 Rüsselsheim (DE); Ackermann, Thomas, 56410 Montabaur (DE); Schüssler, Stefan, 65468 Trebur (DE); Mildner, Udo, 65550 Limburg (DE)
(74) Vertreter: Strauss, Peter

(56) Entgegenhaltungen:
- WO-A-99/16642
- DE-U1- 29 701 805
- US-A- 3 645 162

## Beschreibung

Die Erfindung betrifft ein Befestigungselement für die Befestigung einer Armaturentafel an die Stirnwand eines Kraftfahrzeugs, insbesondere eines Pkws, gemäß dem Oberbegriff des Anspruchs 1.

Bei der Montage eines Kraftfahrzeugs muss die Armaturentafel auf geeignete Weise mit der Stirnwand verbunden werden. Hierfür haben sich in der Praxis eine Vielzahl von Befestigungsmitteln etabliert. Sie zeichnen sich dabei mitunter dadurch aus, dass die Schallisolation unbefriedigend ausfällt, dass viele Komponenten erforderlich sind oder dass der Aufwand für das Verbinden hoch ist.

Ein gattungsgemäßes Befestigungselement ist aus der US 3 645 162 bekannt. Das Befestigungselement dient dort zum Verbinden zweier Wandelemente miteinander. Zwischen den Wandelementen ist eine weitere Wandung angeordnet, durch welche sich das Befestigungselement hindurch erstreckt.

Aus der DE 297 01 805 U1 ist ein Befestigungsstift bekannt, mit zwei federnden Zungen, die sich diametral gegenüber stehen. Die Zungen weisen eine nach innen gewölbte Form auf und sind in eine Aufnahme eines Armaturenbretts unter Vorspannung der Zungen bringbar.

Es ist eine Aufgabe einer Ausführungsform der Erfindung, ein Befestigungselement für das Fixieren einer Armaturentafel an der Stirnwand eines Kraftfahrzeugs bereitzustellen, bei dem eine Montage der Armaturentafel mit möglichst wenig Teilen möglich ist, bei dem die Schallisolation des Fahrzeugs besser ausfällt und mit dem die Montage besonders einfach und schnell möglich ist.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft ein Befestigungselement mit einem zentralen Zylinder, der an seinem ersten Ende über ein Innengewinde verfügt, an seinem anderen Ende mit einer Scheibe, nachfolgend äußere Scheibe genannt, abschließt und dort verschraubbar ausgebildet ist und zwischen der äußeren Scheibe und seinem ersten Ende eine weitere Scheibe, nachfolgend innere Scheibe genannt, durchsetzt.

Das Befestigungselement lässt sich mithilfe des Innengewindes auf eine Schweißschraube aufschrauben. Zwischen dem Bauteil, dass die Schweißschraube besitzt, und der inneren Scheibe lässt sich ein anderes Teil einklemmen. Handelt es sich bei dem Bauteil um die Stirnwand eines Pkws, so lässt sich zwischen der inneren Scheibe, die fest mit dem Zylinder verbunden ist, und der Stirnwand eine Schallisolation einklemmen. Hierzu verfügt die Schallisolation über eine Öffnung, die größer als der Zylinderdurchmesser und kleiner als die innere Scheibe ist, sodass beim Aufschrauben des Befestigungselements auf die Schweißschraube die Schallisolation bei ihrer Öffnung an die Stirnwand gepresst wird. Dies vermeidet es, im Bereich der Befestigungselemente einen Teil der Schallisolation aus Montagegründen auszuschneiden, lässt die mit einer Schallisolation versehbare Stirnwandfläche maximal werden und führt damit zu besonders geringen Fahrgeräuschen im Fahrzeuginnenraum. Gleichzeitig wird die Schallisolation solide befestigt.

Die am äußersten Ende des Zylinders angeordnete äußere Scheibe lässt sich nutzen, um ein weiteres Bauteil mit demjenigen Bauteil zu verbinden, das die Schweißschraube besitzt. Das weitere Bauteil kann über eine Tasche verfügen, in die die äußere Scheibe eingeführt werden kann, um es in Zylinderlängsrichtung zu sichern. Ist es weiterer Bauteil beispielsweise eine Armaturentafel, so kann auf diese Weise deren Verschiebung entgegengesetzt zur Fahrzeuglängsrichtung und auch in vertikaler Richtung verhindert werden. Damit kann die Armaturentafel auf einfache Weise und ohne zusätzliche Hilfsmittel wie beispielsweise einer Schraubenmutter an der Stirnwand fixiert werden. Insgesamt ist damit nur ein Befestigungselement zur Fixierung zweier Bauteile an der Schweißschraube erforderlich. Das Befestigungselement stellt hierbei eine kombinierte Schraub- und Steckverbindung dar, mit der die genannten Bauteile mit geringem Montageaufwand verbunden werden können.

Wie vorstehend erläutert, lässt sich die äußere Scheibe zur Fixierung eines weiteren Bauteils dadurch nutzen, dass sie in eine korrespondierende Tasche des weiteren Bauteils eingeführt wird oder spiegelbildlich die Tasche über die äußere Scheibe geführt wird. Dies kann dazu führen, dass anschließend wegen eines gewissen Spiels die äußere Scheibe gegen die Taschenwände klappern könnte. Um dies zu vermeiden, ist es nach der Erfindung vorgesehen, dass das Befestigungselement aus Kunststoff mit an der äußeren Scheibe angeformten Federelementen versehen ist, die eine nach außen gewölbte Kontaktfläche besitzen, die von einem kerbenförmigen elastischen Element gehalten werden. Die Federelemente befinden sich hierzu in nach außen offenen Öffnungen der äußeren Scheibe und ragen ohne mechanische Belastung geringfügig darüber hinaus. Im Einsatz stößt damit ein Federelement über seine Kontaktfläche gegen die Taschenwand und kompensiert das vorhandene Spiel innerhalb der Tasche.

Das Befestigungselement, das aus Kunststoff gefertigt ist, besitzt in einer zweiten Ausführungsform zwei kreisförmige Scheiben, sodass es bei der Montage nicht auf die Stellung der Scheiben ankommt.

Das Befestigungselement ist im Bereich der äußeren Scheibe verschraubbar ausgebildet, was dadurch realisiert sein kann, dass dort der Zylinder als Innensechskant ausgebildet ist. In einer weiteren Ausführungsform ist als Alternative hierzu die Verschraubbarkeit dadurch realisiert, dass die äußere Scheibe außenseitig eine Vertiefung besetzt und dort der Zylinder als Außensechskant ausgebildet ist.

Ein weiterer Aspekt der Erfindung betrifft ein Kraftfahrzeug mit einer an seiner Stirnwand befestigten Schweißschraube. Auf die Schweißschraube ist ein Befestigungselement nach einem der oben beschriebenen Ausführungsformen aufgeschraubt. Die innere Scheibe des Befestigungselements presst eine Schallisolation gegen die Stirnwand und die äußere Scheibe fixiert eine Armaturentafel an der Stirnwand. Wie oben ausgeführt, kann hierzu die Armaturentafel über eine korrespondierende Tasche verfügen, beispielsweise als u-förmige Aussparung, sodass bei der Montage die Armaturentafel zur Stirnwand bewegt beziehungsweise eingefahren wird und hierbei das Befestigungselement in die Tasche eingeführt wird. Zur Vereinfachung der Montageoperation können hierbei die Schweißschrauben vertikal ausgerichtet sein, weil dann die Bewegung der Armaturentafel horizontal verlaufen kann.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine Ausführungsform eines Befestigungselements in der perspektivischen Seitenansicht,
- Fig. 2: das Befestigungselement der Figur 1 mit Blick auf die Unterseite,
- Fig. 3: den Montagebereich des Befestigungselements der Figur 1, 2,
- Fig. 4: einen Schnitt A-A durch die Figur 3.

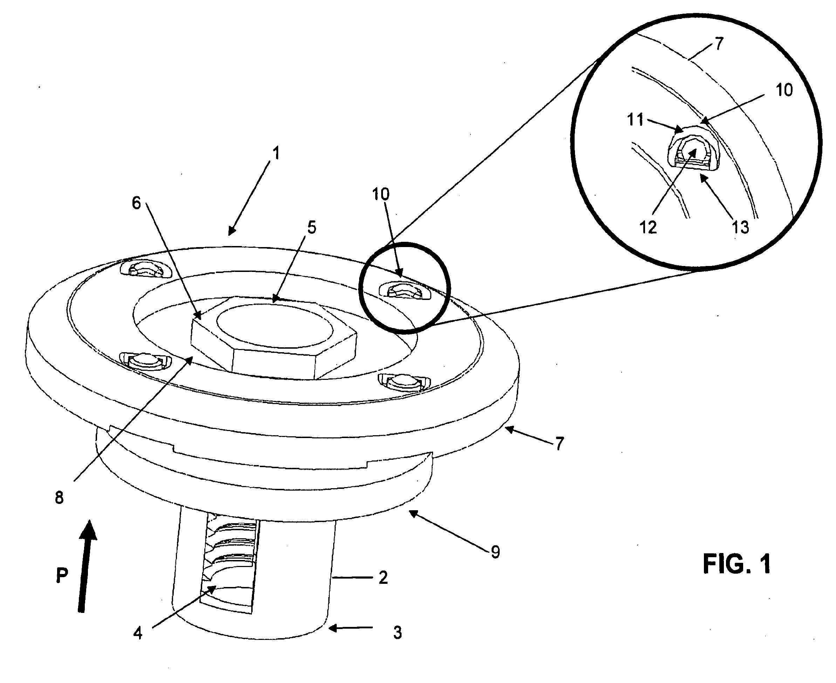

Bei den Figuren, die allgemein mit gleichen Bezugszeichen gleiche Gegenstände bezeichnen, zeigt Figur 1 ein Befestigungselement 1 aus Kunststoff, das zentral über einen Zylinder 2 verfügt. An einem Ende 3 besitzt der Zylinder 2 ein Innengewinde 4. Am anderen Ende 5 ist er über einen Außensechskant 6 verschraubbar ausgebildet.

Der Zylinder 2 ist am anderen Ende 5 mit einer äußeren kreisförmigen Scheibe 7 versehen. Die äußere Scheibeziffer 7 besitzt eine Vertiefung 8, die bündig mit dem Ende 5 des Zylinders 2 abschließt. Zwischen der äußeren Scheibe 7 und dem einen Ende 3 ist eine innere kreisförmige Scheibe 9 angeordnet. Der Durchmesser der äußeren Scheibe 7 ist größer als der Durchmesser der inneren Scheibe 9.

Das Befestigungselement 1 besitzt an der Außenfläche der äußeren Scheibe 7 Federelemente 10, die in der Ausschnittsvergrößerung A vergrößert dargestellt sind. Das Federelement 10 ist in einer Öffnung 11 der äußeren Scheibe 7 eingelassen und besitzt eine nach oben gewölbte Kontaktfläche 12, die über ein kerbenförmiges elastisches Element 13 an den Rand der Öffnung 11 beziehungsweise der äußeren Scheibe 7 angeformt ist.

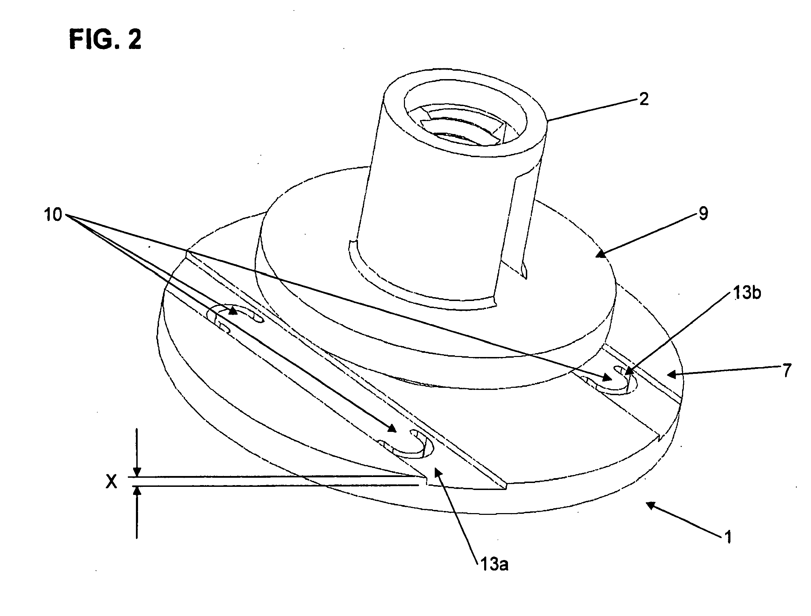

Figur 2 zeigt das Befestigungselement 1 der Figur 1 von der Unterseite her, das heißt mit Blick in Richtung des Pfeils P der Figur 1. Man erkennt, dass im Bereich der Federelemente 10 die Unterseite zwei streifenförmige Aussparungen 13a, 13b hat, d. h. sie dort um eine gewisse Strecke x abgesenkt ist. Um die gleiche Strecke x ragen korrespondierend hierzu die Kontaktflächen 11 der Federelemente 10 über die Außenfläche der äußeren Scheibe 7 hervor. Die Federelemente 10 dienen dazu, wie nachfolgend noch erläutert werden wird, das Spiel innerhalb der aufnehmenden Tasche auszugleichen. Durch die Höhe der Aussparungen 13a, 13b lassen sich insofern die zu erwartenden Einbautoleranzen flexibel kompensieren.

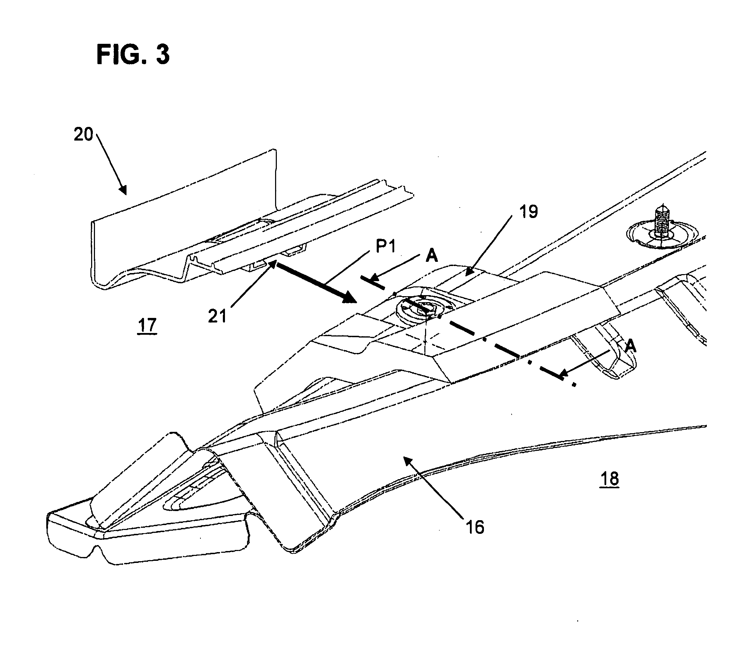

Figur 3 zeigt eine Stirnwand 16, die den Motorraum 18 eines nicht gezeigten Kraftfahrzeugs vom Fahrgastraum 17 abtrennt. Mit dem Befestigungselement 1 wird die Schallisolation 19 zwischen der inneren Scheibe 9 des Befestigungselements 1 und der Stirnwand 16 eingeklemmt. Eine nur ausschnittsweise dargestellte Armaturentafel 20 besitzt eine u-förmige Tasche 21, die bei der Montage in Richtung des Pfeils P1 bewegt wird. Dabei fährt die äußere Scheibe 7 in die Tasche 21 ein und sichert damit die Armaturentafel 20 in vertikaler Richtung. Die Figur 3 zeigt, dass mithilfe eines einzigen Befestigungselements 1 sowohl die Schallisolierung 19 als auch die Armaturentafel 20 an der Stirnwand 16 befestigt werden können. Die Montage ist hierbei auf einfache Weise mit einem Außensechskantschlüssel und mit einer Verschiebeoperation durchzuführen. Es sind keine weiteren Sicherungsmittel oder dergleichen erforderlich. Die Gefahr einer falschen Montage und damit eine Fehlfunktion bei der Montage ist gering.

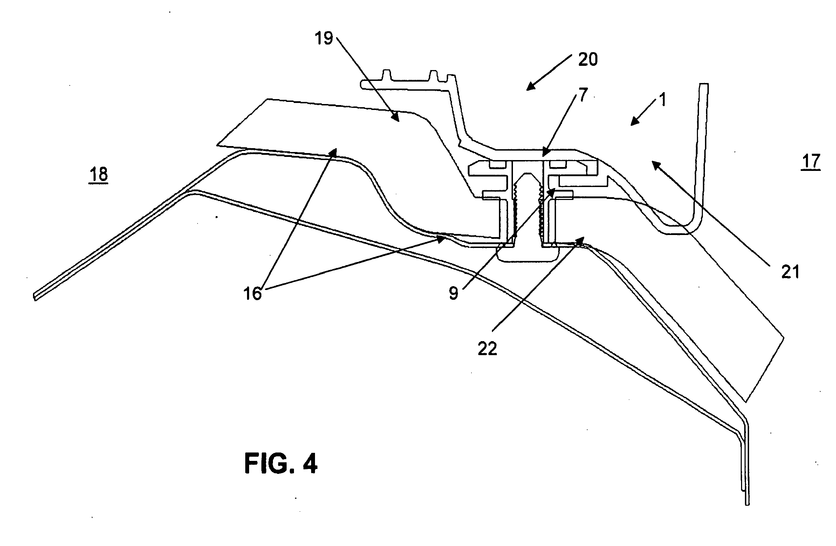

Figur 4 zeigt einen Schnitt A-A durch die Figur 3 mit Blick in Richtung der Pfeile. Man erkennt, dass die Stirnwand 16 über eine Schweißschraube 22 verfügt und zwischen der inneren Scheibe 9 und der Isolierung 16 die Schallisolation 19 eingeklemmt ist. Die äußere Scheibe 7 ist in die Tasche 21 eingefahren. Damit wird die Armaturentafel 20 in vertikaler Richtung gesichert. Die in Figur 1 erkennbaren Federelemente 10 dienen dazu, die Toleranz der äußeren Scheibe 9 in der Tasche 21 auszugleichen. Auf diese Weise ist die äußere Scheibe 9 rüttelfest in die Tasche 21 eingebracht, womit eine Geräuschentwicklung im Fahrbetrieb vermieden wird.

In den Figur 4 ist die Schweißschraube 22 vertikal angeordnet. Dies ermöglicht es, die Armaturentafel 20 durch eine einfache horizontale Längsverschiebung, wie sie in der Figur 3 durch den Pfeil P1 angedeutet ist, zu montieren.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Befestigungselement
- 02: Zylinder
- 03: Ende
- 04: Innengewinde
- 05: Ende
- 06: Außensechskant
- 07: äußere Scheibe
- 08: Vertiefung
- 09: innere Scheibe
- 10: Federelement
- 11: Öffnung
- 12: Kontaktfläche
- 13: elastisches Element
- 14a: Aussparung
- 14b: Aussparung
- 16: Stirnwand
- 17: Fahrgastraum
- 18: Motorraum
- 19: Schallisolation
- 20: Armaturentafel
- 21: Tasche
- 22: Schweißschraube

- P: Pfeil
- P1: Pfeil

## Patentansprüche

1. Befestigungselement (1) mit einem zentralen Zylinder (2), der
a) an seinem ersten Ende (3) über ein Innengewinde (4) verfügt,
b) an seinem anderen Ende (5) mit einer äußeren Scheibe (7) abschließt und dort verschraubbar ausgebildet ist und
c) zwischen der äußeren Scheibe und seinem ersten Ende eine innere Scheibe (9) durchsetzt,
**dadurch gekennzeichnet, dass** das Befestigungselement (1) aus Kunststoff besteht, und mit an die äußere Scheibe angeformten Federelementen versehen ist, die eine nach außen gewölbte Kontaktfläche (12) besitzen, die von einem kerbenförmigen elastischen Element (13) gehalten werden.

2. Befestigungselement nach Anspruch 1, **dadurch gekennzeichnet, dass** die äußere Scheibe und die innere Scheibe kreisförmig sind.

3. Befestigungselement nach Anspruch 1 oder 2, **dadurch gekennzeichnet, dass** die äußere Scheibe außenseitig eine Vertiefung (8) besitzt und der Zylinder dort als Außensechskant (6) ausgebildet ist.

4. Befestigungselement nach einem der vorherigen Ansprüche, **dadurch gekennzeichnet, dass** die äußere Scheibe eingelassene Federelemente (10) besitzt.

5. Kraftfahrzeug mit einer an seiner Stirnwand (16) befestigten Schweißschraube (22), wobei auf die Schweißschraube ein Befestigungselement (1) nach einem der vorherigen Ansprüche aufgeschraubt ist, dessen innere Scheibe (9) eine Schallisolation (19) gegen die Stirnwand presst und wobei die äußere Scheibe (7) des Befestigungselements eine Armaturentafel (20) an der Stirnwand fixiert.

6. Kraftfahrzeug nach Anspruch 5, **dadurch gekennzeichnet, dass** die Armaturentafel des Kraftfahrzeuges über eine u-förmige Tasche (21) verfügt, in den die äußere Scheibe des Befestigungselements eingefahren ist.

7. Kraftfahrzeug nach Anspruch 5 oder 6, **dadurch gekennzeichnet, dass** die Schweißschraube (22) vertikal ausgerichtet ist.

## Claims

1. A fastening element (1) with a central cylinder (2) which
a) comprises an inside thread (4) at its first end (3);
b) ends at its other end (5) with an outer disk (7) and is arranged to be screwable, and
c) penetrates an inner disk (9) between the outer disk and its first end;
**characterized in that** the fastening element (1) consists of plastic and is provided with spring elements which are attached to the outer disk and comprise an outwardly curved contact surface (12) which are held by a notch-like elastic element (13).

2. A fastening element according to claim 1, **characterized in that** the outer disk and the inner disk are circular.

3. A fastening element according to claim 1 or 2,
**characterized in that** the outer disk comprises a depression (8) on the outside and the cylinder is arranged there as an external hexagon (6).

4. A fastening element according to one of the preceding claims, **characterized in that** the outer disk comprises embedded spring elements (10).

5. A motor vehicle, comprising a weld screw (22) which is fastened to its face wall (16), with a fastening element (1) according to one of the preceding claims being screwed onto the weld screw, the inner disk (9) of which presses a sound insulation (19) against the face wall and with the outer disk (7) of the fastening element fixing a dashboard (20) to the face wall.

6. A motor vehicle according to claim 5, **characterized in that** the dashboard of the motor vehicle comprises a U-shaped pocket (21) into which the outer disk of the fastening element is driven.

7. A motor vehicle according to claim 5 or 6, **characterized in that** the weld screw (22) is aligned vertically.

## Revendications

1. Élément de fixation (1) avec un cylindre central (2), qui
a) possède à sa première extrémité (3) un filetage intérieur (4),
b) se termine à son autre extrémité (5) par un disque extérieur (7) et y est conformé de façon à pouvoir être vissé, et
c) traverse entre le disque extérieur et sa première extrémité un disque intérieur (9),
**caractérisé en ce que** l'élément de fixation (1) se compose de matière plastique et est muni d'éléments de ressort formés sur le disque extérieur, qui possèdent une surface de contact (12) bombée vers l'extérieur et qui sont retenus par un élément élastique (13) en forme d'entaille.

2. Élément de fixation selon la revendication 1, **caractérisé en ce que** le disque extérieur et le disque intérieur sont circulaires.

3. Élément de fixation selon la revendication 1 ou 2, **caractérisé en ce que** le disque extérieur possède sur sa face extérieure une concavité (8) et le cylindre y est conformé comme un hexagone (6).

4. Élément de fixation selon l'une des revendications précédentes, **caractérisé en ce que** le disque extérieur possède des éléments de ressort (10) inclus.

5. Véhicule à moteur avec une vis soudée (22) fixée sur sa paroi antérieure (16), laquelle vis soudée reçoit un élément de fixation (1) vissé selon l'une des revendications précédentes, dont le disque intérieur (9) presse un isolant insonorisant (19) contre la paroi antérieure, et dans lequel le disque extérieur (7) de l'élément de fixation fixe un tableau de bord (20) sur la paroi antérieure.

6. Véhicule à moteur selon la revendication 5, **caractérisé en ce que** le tableau de bord du véhicule à moteur possède une poche en forme de U (21) dans laquelle le disque extérieur de l'élément de fixation est introduit.

7. Véhicule à moteur selon la revendication 5 ou 6, **caractérisé en ce que** la vis soudée (22) est orientée verticalement.
